# EUROPÄISCHE PATENTANMELDUNG

(11) **EP 3 471 013 A1**
(43) Veröffentlichungstag der Anmeldung: **17.04.2019**
(21) Anmeldenummer: 17195991.9
(22) Anmeldetag: 11.10.2017
(51) Int. Cl.: G06K 7/10, G06K 9/00, G07C 9/00, G07C 9/02, G07C 1/10

(54) **VERFAHREN ZUR KONTROLLE VON ZUGANGSBERECHTIGUNGEN DURCH EIN ZUGANGSKONTROLLSYSTEM**

(71) Anmelder: SKIDATA AG, 5083 Grödig/Salzburg (AT)
(72) Erfinder: Dr. HAIDACHER, Martin, 5020 Salzburg (AT); AIGNER, Roland, 5400 Hallein/Rif (AT)
(74) Vertreter: Karakatsanis, Georgios

(57) **Zusammenfassung**

Es wird ein Verfahren zur Kontrolle von Zugangsberechtigungen durch ein Zugangskontrollsystem vorgeschlagen, im Rahmen dessen jeder Eingangsbereich des vom Zugangskontrollsystem abgedeckten Gebiets in zwei in Richtung auf den Eingang aufeinander folgende Bereiche (1, 2) unterteilt wird, so dass Personen, welche in den vom Zugangskontrollsystem abgedeckten Bereich eintreten wollen, zuerst den ersten (2) und anschließend den zweiten (1) Bereich durchschreiten müssen, wobei der erste Bereich (2) als Registrierungsbereich dient und von Sende/Leseeinrichtungen (3) nach zumindest einem Standard zur drahtlosen Kommunikation abgedeckt wird, wobei der zweite Bereich (1) als Identifikationsbereich dient und von Kameras abgedeckt ist, die die in diesem Bereich anwesenden Personen erfassen und tracken können, wobei bei der Erfassung der Personen optische Referenzdaten erfasst werden und pro erfasster Person ein Datensatz enthaltend die optischen Referenzdaten und die aktuelle Position der Person an einen Server in Echtzeit übermittelt wird und wobei anhand dieser Datensätze eine Real-Time-Map enthaltend die optischen Referenzdaten erstellt wird, wobei mittels der Lese/Schreibeinrichtungen (3) gesendete oder ausgelesene IDs erfasst werden, denen Zugangsberechtigungen und optische Referenzdaten eindeutig zugeordnet sind, wobei die von den Lese/Schreibeinrichtungen (3) erfassten IDs und die den IDs zugeordneten optischen Referenzdaten in einer optischen Referenzliste auf dem Server zwischengespeichert werden, wobei im Server die Datensätze der optischen Referenzliste mit den Datensätzen der Real-Time-Map in Echtzeit miteinander verglichen werden.

## Beschreibung

Die vorliegende Erfindung bezieht sich auf ein Verfahren zur Kontrolle von Zugangsberechtigungen durch ein Zugangskontrollsystem gemäß dem Oberbegriff des Patentanspruchs 1.

Aus dem Stand der Technik sind Zugangskontrollvorrichtungen für Personen bekannt, welche in der Regel Mittel zum berührungslosen Erfassen und zum Auswerten der Zugangsberechtigungen sowie mechanische oder sonstig ausgeführte Sperren aufweisen, wobei die Sperren erst nach Vorliegen einer gültigen Zugangsberechtigung automatisch oder manuell im Öffnungssinne betätigt werden.

Durch die Sperren und die damit einhergehende Blockade des Zutritts wird der Zutritt in nachteiliger Weise unkomfortabel gestaltet. Des Weiteren resultiert die Verwendung von Zugangskontrollvorrichtungen umfassend Sperren in hohen Herstellungs- und Wartungskosten.

Ferner erweist sich eine Zugangskontrolle mittels Sperren aufweisende Zugangskontrollvorrichtungen als ineffizient, da in der Regel der überwiegende Anteil der Benutzer im Besitz einer gültigen Zugangsberechtigung ist. Nach dem Stand der Technik werden sämtliche Benutzer kontrolliert, um einen in der Regel sehr geringen Anteil von Personen mit ungültiger oder keiner Zugangsberechtigung zu ermitteln.

Der vorliegenden Erfindung liegt die Aufgabe zugrunde, ein Verfahren zur Kontrolle von Zugangsberechtigungen durch ein Zugangskontrollsystem anzugeben, durch dessen Durchführung die Sperren entfallen und der Komfort erhöht wird, ohne die Qualität der Kontrolle der Zugangsberechtigungen zu beeinträchtigen.

Diese Aufgabe wird durch die Merkmale des Patentanspruchs 1 gelöst. Demnach wird ein Verfahren zur Kontrolle von Zugangsberechtigungen durch ein Zugangskontrollsystem vorgeschlagen, im Rahmen dessen jeder Eingangsbereich des vom Zugangskontrollsystem abgedeckten Gebiets in zwei in Richtung auf den Eingang aufeinander folgende Bereiche unterteilt wird, so dass Personen, welche in den vom Zugangskontrollsystem abgedeckten Bereich eintreten wollen, zuerst den ersten und anschließend den zweiten Bereich durchschreiten müssen. Das vom Zugangskontrollsystem abgedeckte Gebiet weist zumindest einen Eingangsbereich auf.

Hierbei ist der erste Bereich, der als Registrierungsbereich dient, von Sende/Leseeinrichtungen nach zumindest einem Standard zur drahtlosen Kommunikation abgedeckt, wobei der zweite Bereich, der als Identifizierungsbereich dient, von Kameras abgedeckt ist, die die in diesem Bereich anwesenden Personen erfassen und tracken können, wobei bei der Erfassung der Personen optische Referenzdaten erfasst werden, die biometrische Merkmale und/oder Merkmale sind, welche den erfassten Personen eindeutig zugeordnet werden können, wobei pro erfasster Person ein Datensatz enthaltend die optischen Referenzdaten und die aktuelle Position der Person an den Server in Echtzeit übermittelt wird und wobei anhand dieser Datensätze eine Real-Time-Map enthaltend die optischen Referenzdaten erstellt wird.

Im Rahmen weiterer Ausgestaltungen der Erfindung können sich der Registrierungsbereich und der Identifikationsbereich teilweise überlappen.

Mittels der Lese/Schreibeinrichtungen, welche den Registrierungsbereich abdecken, werden von mobilen elektronischen Geräten wie Smartphones, Tablets oder Smartwatches oder von Datenträgern, wie beispielsweise RFID-Karten, gesendete bzw. ausgelesene IDs, denen Zugangsberechtigungen und optische Referenzdaten eindeutig zugeordnet sind, erfasst.

Im Rahmen einer ersten Ausgestaltung der Erfindung werden von den mobilen elektronischen Geräten oder von den Datenträgern gemeinsam mit der jeweiligen ID die optischen Referenzdaten, beispielsweise Vektoren, welche die Biometrie des Gesichts einer Person beschreiben, an die Lese/Schreibeinrichtungen gesendet, wobei die von den Lese/Schreibeinrichtungen empfangenen Daten an einen Server übermittelt werden.

Alternativ können die jeweils einer ID zugeordneten optischen Referenzdaten auf dem Server hinterlegt sein, an den die Lese/Schreibeinrichtungen die erfassten IDs übermitteln.

Die optischen Referenzdaten können im Rahmen einer Registrierung der Personen mit der ID verknüpft werden, an den Server übermittelt oder auf mobilen elektronischen Geräten oder Datenträgern abgelegt werden.

Gemäß der Erfindung werden die von den Lese/Schreibeinrichtungen erfassten IDs und die den IDs zugeordneten optischen Referenzdaten, die jeweils in einem Datensatz enthaltend eine ID und die dieser ID zugeordneten optischen Referenzdaten zusammengefasst sind, in einer optischen Referenzliste auf dem Server zwischengespeichert.

Erfindungsgemäß ist vorgesehen, dass die Datensätze der optischen Referenzliste im Server mit den Datensätzen der Real-Time-Map in Echtzeit miteinander verglichen werden. Hierbei wird überprüft, ob die in der optischen Referenzliste gespeicherten optischen Referenzdaten eines Datensatzes den optischen Referenzdaten eines Datensatzes der Real-Time-Map entsprechen. Wenn dies der Fall ist, wird der Person entsprechend dem Datensatz der Real-Time-Map die eindeutige ID zugeordnet, die im Datensatz der optischen Referenzliste enthalten und im Registrierungsbereich erfasst worden ist, wobei anschließend im Server die Gültigkeit der dieser ID zugeordneten Zugangsberechtigung überprüft wird.

Wenn die optischen Referenzdaten eines Datensatzes der Real-Time-Map keinem Datensatz der optischen Referenzliste hinsichtlich der optischen Referenzdaten entsprechen, wird davon ausgegangen, dass die Person entsprechend dem Datensatz der Real-Time-Map keine Zugangsberechtigung bei sich trägt.

Gemäß einer Weiterbildung der Erfindung kann für den Fall einer Person ohne Zugangsberechtigung ein Tracking dieser Person mittels zumindest einer Kamera durchgeführt werden, wobei anhand der Tracking-Informationen vorzugsweise eine manuelle Zugangskontrolle durchgeführt wird. Ferner kann diese Person mittels eines Laser- bzw. Lichtstrahls markiert werden, um auf diese Weise das Auffinden der Person seitens des Personals zu vereinfachen.

Gemäß einer weiteren Ausgestaltung der Erfindung kann für den Fall einer Person ohne Zugangsberechtigung eine Umleitung einer Personengruppe, in der sich diese Person befindet, durch Aktivierung von Mitteln zur Umleitung von Personen, beispielsweise von Personenschleusen, durchgeführt werden, wobei die Personengruppe derart umgeleitet werden kann, dass Mittel zur Kontrolle der Zugangsberechtigungen umfassend eine Zugangskontrollvorrichtung mit mechanischer Sperre, wobei die Zugangsberechtigungen berührungslos auslesbar sind, passiert werden. Die Mittel zur Umleitung von Personen können automatisch oder manuell durch betätigen eines Schalters oder einer mechanischen Vorrichtung aktiviert werden.

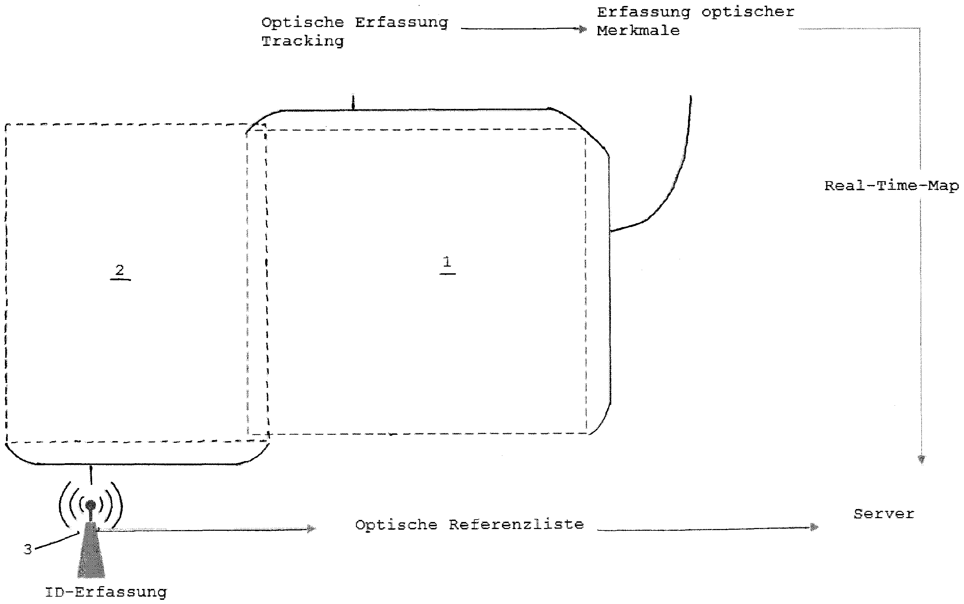

Die Erfindung wird im Folgenden anhand der beigefügten Figur beispielhaft näher erläutert.

In der beigefügten Figur sind der Identifikationsbereich mit dem Bezugszeichen 1 und der Registrierungsbereich mit dem Bezugszeichen 2 bezeichnet. Gemäß der Erfindung ist der Registrierungsbereich 2 von Sende/Leseeinrichtungen 3 nach zumindest einem Standard zur drahtlosen Kommunikation abgedeckt, wobei der Identifikationsbereich 1 von Kameras abgedeckt ist, welche die in diesem Bereich anwesenden Personen erfassen und tracken können. Die Kameras können beispielsweise als 3D-Kameras ausgeführt sein.

Mittels der Kameras, die den Identifikationsbereich 1 abdecken, werden optische Referenzdaten der in diesem Bereich anwesenden Personen erfasst, die biometrische Merkmale und/oder Merkmale sind, welche den erfassten Personen eindeutig zugeordnet werden können, wobei pro erfasster Person ein Datensatz enthaltend die optischen Referenzdaten und die aktuelle Position der Person an einen Server in Echtzeit übermittelt wird und wobei anhand dieser Datensätze eine Real-Time-Map enthaltend die optischen Referenzdaten erstellt wird.

Gemäß der Erfindung kann mittels der Kameras eine Gesichtserkennung durchgeführt werden. Vorzugsweise wird mittels eines neuronalen Netzwerks ein Zahlenvektor erzeugt, welcher das aufgenommene Gesicht repräsentiert. Gemäß einer Weiterbildung kann bei einer ausreichend hohen Auflösung der Kameras die Retina der Personen gescannt werden und das Ergebnis als biometrisches Merkmal verwendet werden. Ferner kann auch eine Abfolge von Bildern einer Peron erstellt und analysiert werden, wobei anhand des Bewegungsablaufs einer Person eine dementsprechende Signatur errechnet werden kann.

Wenn als Kameras 3D-Kameras verwendet werden, kann die 3D Oberfläche eines Teils einer Person, beispielsweise des Gesichts erfasst werden, um daraus Merkmale zu errechnen, welche der Person eindeutig zugeordnet werden können.

Gemäß einer Weiterbildung können mittels der Kameras auch Bilder im nicht sichtbaren Spektrum, beispielsweise Thermalbilder erstellt werden, aus denen Merkmale errechnet werden, die den erfassten Personen eindeutig zugeordnet werden können. Ferner können zur Gewinnung der optischen Referenzdaten mehrere der genannten Verfahren kombiniert werden.

Mittels der Lese/Schreibeinrichtungen 3, die den Registrierungsbereich 2 abdecken, werden über zumindest einen Standard zur drahtlosen Kommunikation, dessen Reichweite ausreicht, um mittels der Lese/Schreibeinrichtungen 3 den Registrierungsbereich abzudecken, beispielsweise über einen WLAN-, BLE- oder UWB-Standard von mobilen elektronischen Geräten wie Smartphones, Tablets oder Smartwatches oder von Datenträgern, die die in diesem Bereich anwesenden Personen bei sich tragen, gesendete oder ausgelesene IDs erfasst, denen Zugangsberechtigungen und optische Referenzdaten eindeutig zugeordnet sind. Die Verwendung des Bluetooth Low Energy-Standards (BLE) resultiert in einem deutlich geringeren Stromverbrauch als beim herkömmlichen Bluetooth-Standard und in einer hohen Reichweite, die bis zu 100 Meter betragen kann. Auch ein WLAN- oder UWB-Standard sind geeignet, um die notwendige Information über eine ausreichend große Distanz, vergleichbar derjenigen des BLE Standards, zu übertragen.

Im Rahmen einer ersten Ausgestaltung der Erfindung werden von den Lese/Schreibeinrichtungen 3, die den Registrierungsbereich 2 abdecken, von mobilen elektronischen Geräten wie Smartphones, Tablets oder Smartwatches oder von Datenträgern, die die in diesem Bereich anwesenden Personen bei sich tragen gemeinsam mit der jeweiligen ID auch gesendete oder ausgelesene optische Referenzdaten, beispielsweise Vektoren, welche die Biometrie des Gesichts einer Person beschreiben, erfasst, wobei die von den Lese/Schreibeinrichtungen empfangenen Daten an den Server übermittelt werden.

Alternativ können die jeweils einer von den Lese/Schreibeinrichtungen 3 erfassten ID zugeordneten optischen Referenzdaten auf dem Server hinterlegt sein, an den die Lese/Schreibeinrichtungen 3 die erfassten IDs übermitteln.

Die optischen Referenzdaten, die den gesendeten oder ausgelesenen ID's eindeutig zugeordnet sind, werden mittels der Verfahren zur Gewinnung der optischen Referenzdaten im Identifikationsbereich 1 gewonnen. Das heißt wenn die optischen Referenzdaten im Identifikationsbereich 1 mittels einer normalen optischen Kamera aufgenommen werden, dann wird auch für die Aufnahme der optischen Referenzdaten, die den gesendeten oder ausgelesenen ID's eindeutig zugeordnet sind, eine normale, herkömmliche optische Kamera verwendet. Dadurch wird ein Vergleich dieser Daten ermöglicht. Erfindungsgemäß kann die Aufnahme dieser Referenzdaten direkt beim Verkauf an der Verkaufsstelle erfolgen, beispielsweise an der Kasse oder am Verkaufsautomaten. Ferner können diese Referenzdaten beim ersten Zutritt aufgenommen werden, beispielsweise beim ersten Zutritt in einen Vergnügungspark oder ein Skigebiet. Ferner können die Referenzdaten vom Benutzer selber aufgenommen werden, z.B. mittels Selfie am Handy. Für den Fall, dass sich Personen dass beim Besuch eines Events zusätzlich mit einem Ausweis ausweisen müssen, um zum Beispiel das Alter festzustellen, kann der Ausweis gescannt werden, wodurch Referenzdaten gewonnen werden können.

Die von den Lese/Schreibeinrichtungen 3 erfassten IDs und die den IDs zugeordneten optischen Referenzdaten, werden jeweils in einem Datensatz enthaltend eine ID und die dieser ID zugeordneten optischen Referenzdaten zusammengefasst und in einer optischen Referenzliste auf dem Server zwischengespeichert.

Gemäß der Erfindung werden im Server die Datensätze der optischen Referenzliste mit den Datensätzen der Real-Time-Map in Echtzeit miteinander verglichen, wobei überprüft wird, ob die in der optischen Referenzliste gespeicherten optischen Referenzdaten eines Datensatzes den optischen Referenzdaten eines Datensatzes der Real-Time-Map entsprechen. Wenn dies der Fall ist, wird der Person entsprechend dem Datensatz der Real-Time-Map die eindeutige ID zugeordnet, die im Datensatz der optischen Referenzliste enthalten und im Registrierungsbereich 2 erfasst worden ist, wobei anschließend die Gültigkeit der dieser ID zugeordneten, d.h. der mit dieser ID verknüpften Zugangsberechtigung überprüft wird.

Wenn die optischen Referenzdaten eines Datensatzes der Real-Time-Map keinem Datensatz der optischen Referenzliste hinsichtlich der optischen Referenzdaten entsprechen, wird davon ausgegangen, dass die Person entsprechend dem Datensatz der Real-Time-Map keine Zugangsberechtigung bei sich trägt.

Bei der Durchführung des erfindungsgemäßen Verfahrens werden die optischen Referenzdaten einer Person mit den optischen Referenzdaten einer begrenzten Anzahl von Personen, die von der Größe des Identifikationsbereichs und des Registrierungsbereichs abhängt, verglichen. In der Regel werden es zwischen 10 und 50 Personen sein, deren IDs, denen Zugangsberechtigungen und optische Referenzdaten eindeutig zugeordnet sind, berührungslos im Registrierungsbereich 2 erfasst worden sind und im Identifikationsbereich 1 keiner eindeutigen ID zugeordnet worden sind, die im Datensatz der optischen Referenzliste enthalten und im Registrierungsbereich 2 erfasst worden ist.

Durch diese Einschränkung des Vergleichs auf eine geringe Zahl von Personen wird in vorteilhafter Weise die Wahrscheinlichkeit limitiert, dass sich zwei Personen aus dieser Menge in Hinblick auf die optischen Referenzdaten sehr ähnlich sind, so dass eine größere Toleranz bei der Identifikation von Personen, d.h. beim Vergleich der Datensätze der optischen Referenzliste mit den Datensätzen der Real-Time-Map zugrunde gelegt werden kann. Auf diese Weise kann die Identifikation eine bessere Trefferquote bei weniger aufwendigen Algorithmen und bei einer hohen Geschwindigkeit aufweisen.

Gemäß einer Ausgestaltung der Erfindung weist der zumindest eine Eingangsbereich des vom Zugangskontrollsystem abgedeckten Gebiets keine Sperrorgane auf. Wenn eine Person, der gemäß dem erfindungsgemäßen Verfahren eine eindeutige, im Registrierungsbereich 2 erfasste und mit einer gültigen Zugangsberechtigung verknüpfte ID zugeordnet ist, anhand der Real-Time-Map eine vorgegebene virtuelle Linie passiert, was dem Zutritt in das vom Zugangskontrollsystem abgedeckte Gebiet entspricht, wird ein entsprechender Eintrag in einem Server des Zugangskontrollsystems erstellt.

Wenn eine Person, der gemäß dem erfindungsgemäßen Verfahren keine eindeutige, im Registrierungsbereich 2 erfasste und mit einer gültigen Zugangsberechtigung verknüpfte ID zugeordnet ist, oder eine im Registrierungsbereich 2 erfasste, jedoch mit keiner gültigen Zugangsberechtigung verknüpfte ID zugeordnet ist anhand der Real-Time-Map die vorgegebene virtuelle Linie passiert, wird im System ein unberechtigter Zutritt erkannt, wobei ein optisches und/oder akustisches Signal generiert wird und eine manuelle Kontrolle durchgeführt werden kann. Auf diese Weise wird ein Zugangskontrollsystem ohne Sperren realisiert.

Gemäß einer weiteren Ausgestaltung kann, wenn ein unberechtigter Zutritt erkannt wird, eine Umleitung einer Personengruppe, umfassend die Person ohne gültige Zugangsberechtigung durch Aktivierung von Mitteln zur Umleitung von Personen, beispielsweise von Personenschleusen, durchgeführt werden, wobei die Personengruppe derart umgeleitet wird, dass Mittel zur Kontrolle der Zugangsberechtigungen umfassend eine Zugangskontrollvorrichtung mit mechanischer Sperre, wobei die Zugangsberechtigungen berührungslos auslesbar sind, passiert werden. Die Mittel zur Umleitung von Personen können automatisch oder manuell durch betätigen eines Schalters oder einer mechanischen Vorrichtung aktiviert werden.

Alternativ weist der zumindest eine Eingangsbereich des vom Zugangskontrollsystem abgedeckten Gebiets zumindest eine Zugangskontrollvorrichtung mit jeweils einem Sperrorgan auf, welches im Öffnungssinne betätigt wird, wenn sich gemäß der Real-Time-Map eine Person der Zugangskontrollvorrichtung in einem vorgegebenen Abstand nähert, der gemäß dem erfindungsgemäßen Verfahren eine eindeutige, im Registrierungsbereich 2 erfasste und mit einer gültigen Zugangsberechtigung verknüpfte ID zugeordnet ist.

## Patentansprüche

1. Verfahren zur Kontrolle von Zugangsberechtigungen durch ein Zugangskontrollsystem, **dadurch gekennzeichnet, dass** jeder Eingangsbereich des vom Zugangskontrollsystem abgedeckten Gebiets in zwei in Richtung auf den Eingang aufeinander folgende Bereiche (1, 2) unterteilt wird, so dass Personen, welche in den vom Zugangskontrollsystem abgedeckten Bereich eintreten wollen, zuerst den ersten (2) und anschließend den zweiten (1) Bereich durchschreiten müssen, wobei der erste Bereich (2) als Registrierungsbereich dient und von Sende/Leseeinrichtungen (3) nach zumindest einem Standard zur drahtlosen Kommunikation abgedeckt wird, wobei der zweite Bereich (1) als Identifikationsbereich dient und von Kameras abgedeckt ist, die die in diesem Bereich anwesenden Personen erfassen und tracken können, wobei bei der Erfassung der Personen optische Referenzdaten erfasst werden, die biometrische Merkmale und/oder Merkmale sind, welche den erfassten Personen eindeutig zugeordnet werden können, wobei pro erfasster Person ein Datensatz enthaltend die optischen Referenzdaten und die aktuelle Position der Person an einen Server in Echtzeit übermittelt wird und wobei anhand dieser Datensätze eine Real-Time-Map enthaltend die optischen Referenzdaten erstellt wird, wobei mittels der Lese/Schreibeinrichtungen (3), die den Registrierungsbereich (2) abdecken, über zumindest einen Standard zur drahtlosen Kommunikation von mobilen elektronischen Geräten oder von Datenträgern, die die in diesem Bereich anwesenden Personen bei sich tragen, gesendete oder ausgelesene IDs erfasst werden, denen Zugangsberechtigungen und optische Referenzdaten eindeutig zugeordnet sind, wobei die von den Lese/Schreibeinrichtungen (3) erfassten IDs und die den IDs zugeordneten optischen Referenzdaten, jeweils in einem Datensatz enthaltend eine ID und die dieser ID zugeordneten optischen Referenzdaten zusammengefasst und in einer optischen Referenzliste auf dem Server zwischengespeichert werden, wobei im Server die Datensätze der optischen Referenzliste mit den Datensätzen der Real-Time-Map in Echtzeit miteinander verglichen werden, wobei überprüft wird, ob die in der optischen Referenzliste gespeicherten optischen Referenzdaten eines Datensatzes den optischen Referenzdaten eines Datensatzes der Real-Time-Map entsprechen, wobei wenn dies der Fall ist, der Person entsprechend dem Datensatz der Real-Time-Map die eindeutige ID zugeordnet wird, die im Datensatz der optischen Referenzliste enthalten und im Registrierungsbereich 2 erfasst worden ist, wobei anschließend die Gültigkeit der dieser ID zugeordneten Zugangsberechtigung überprüft wird und wobei wenn die optischen Referenzdaten eines Datensatzes der Real-Time-Map keinem Datensatz der optischen Referenzliste hinsichtlich der optischen Referenzdaten entsprechen, davon ausgegangen wird, dass die Person entsprechend dem Datensatz der Real-Time-Map keine Zugangsberechtigung bei sich trägt.

2. Verfahren zur Kontrolle von Zugangsberechtigungen durch ein Zugangskontrollsystem, nach Anspruch 1, **dadurch gekennzeichnet, dass** von den Lese/Schreibeinrichtungen (3) von den mobilen elektronischen Geräten oder von den Datenträgern, gemeinsam mit der jeweiligen ID auch gesendete oder ausgelesene optische Referenzdaten erfasst werden, wobei die von den Lese/Schreibeinrichtungen (3) empfangenen Daten an den Server übermittelt werden.

3. Verfahren zur Kontrolle von Zugangsberechtigungen durch ein Zugangskontrollsystem, nach Anspruch 1, **dadurch gekennzeichnet, dass** die jeweils einer von den Lese/Schreibeinrichtungen (3) erfassten ID zugeordneten optischen Referenzdaten auf dem Server hinterlegt sind, an den die Lese/Schreibeinrichtungen (3) die erfassten IDs übermitteln.

4. Verfahren zur Kontrolle von Zugangsberechtigungen durch ein Zugangskontrollsystem, nach Anspruch 1, 2 oder 3, **dadurch gekennzeichnet, dass** der zumindest eine Eingangsbereich des vom Zugangskontrollsystem abgedeckten Gebiets keine Sperrorgane aufweist, wobei wenn eine Person, der eine eindeutige, im Registrierungsbereich (2) erfasste und mit einer gültigen Zugangsberechtigung verknüpfte ID zugeordnet ist, anhand der Real-Time-Map eine vorgegebene virtuelle Linie passiert, was dem Zutritt in das vom Zugangskontrollsystem abgedeckte Gebiet entspricht, ein entsprechender Eintrag in einem Server des Zugangskontrollsystems erstellt wird.

5. Verfahren zur Kontrolle von Zugangsberechtigungen durch ein Zugangskontrollsystem, nach Anspruch 4, **dadurch gekennzeichnet, dass**, wenn eine Person, der keine eindeutige, im Registrierungsbereich (2) erfasste und mit einer gültigen Zugangsberechtigung verknüpfte ID zugeordnet ist, oder eine im Registrierungsbereich (2) erfasste, jedoch mit keiner gültigen Zugangsberechtigung verknüpfte ID zugeordnet ist anhand der Real-Time-Map die vorgegebene virtuelle Linie passiert, im System ein unberechtigter Zutritt erkannt wird.

6. Verfahren zur Kontrolle von Zugangsberechtigungen durch ein Zugangskontrollsystem, nach Anspruch 5, **dadurch gekennzeichnet, dass**, wenn ein unberechtigter Zutritt erkannt wird, ein optisches und/oder akustisches Signal generiert wird.

7. Verfahren zur Kontrolle von Zugangsberechtigungen durch ein Zugangskontrollsystem, nach Anspruch 5 oder 6, **dadurch gekennzeichnet, dass**, wenn ein unberechtigter Zutritt erkannt wird, eine Umleitung einer Personengruppe, umfassend die Person ohne gültige Zugangsberechtigung durch Aktivierung von Mitteln zur Umleitung von Personen, durchgeführt wird, wobei die Personengruppe derart umgeleitet wird, dass Mittel zur Kontrolle der Zugangsberechtigungen umfassend eine Zugangskontrollvorrichtung mit mechanischer Sperre, wobei die Zugangsberechtigungen berührungslos auslesbar sind, passiert werden.

8. Verfahren zur Kontrolle von Zugangsberechtigungen durch ein Zugangskontrollsystem, nach Anspruch 1, 2 oder 3, **dadurch gekennzeichnet, dass** der zumindest eine Eingangsbereich des vom Zugangskontrollsystem abgedeckten Gebiets zumindest eine Zugangskontrollvorrichtung mit jeweils einem Sperrorgan auf weist, welches im Öffnungssinne betätigt wird, wenn sich gemäß der Real-Time-Map eine Person der Zugangskontrollvorrichtung in einem vorgegebenen Abstand nähert, der eine eindeutige, im Registrierungsbereich (2) erfasste und mit einer gültigen Zugangsberechtigung verknüpfte ID zugeordnet ist.
